# EUROPEAN PATENT SPECIFICATION

(11) **EP 3 607 861 B1**
(45) Date of publication and mention of the grant of the patent: **21.12.2022**
(21) Application number: 18776199.4
(22) Date of filing: 14.03.2018
(51) Int. Cl.: A47J 42/34, A47J 42/38

(54) **HANDHELD HOUSEHOLD GRINDER**
TRAGBARE HAUSHALTSMÜHLE
BROYEUR MÉNAGER PORTATIF

(30) Priority: 01.04.2017 CN 201710212307
(43) Date of publication of application: 12.02.2020
(73) Proprietor: Ningbo Chefshere Kitchen Technology Co., Ltd, Ningbo, Zhejiang 315177 (CN)
(72) Inventor: ZHANG, Guoping, Zhejiang 315177 (CN)
(74) Representative: Cabinet Chaillot
(86) International application number: PCT/CN2018/079053
(87) International publication number: WO 2018/177122

(56) References cited:
- CN-A- 106 983 390
- CN-U- 201 481 160
- CN-U- 204 008 247
- CN-U- 204 765 209
- CN-Y- 2 657 553
- DE-U1- 20 018 675
- DE-U1-202015 008 815
- TW-A- 201 515 620
- TW-A- 201 705 886
- US-A1- 2006 076 441

## Description

### Technical Field

The present disclosure relates to the technical field of kitchen utensils, in particular to a handheld household grinder.

### Background

A household grinder refers to a household hand-operated tool for grinding large-grained or blocky seasonings or spices, it has gained great popularity since compared to a large grinding apparatus, it's more suitable for realizing fresh grinding of a small amount of seasonings in family kitchen for instant use. Whereas, the existing household grinder is mostly electrically driven or handheld rocker-arm driven, and finally implements smashing by driving crushing blades through a rotation shaft or squeezed pulverization through oppositely rotatable two rollers. Apparently, the grinder in the prior art is complicated in structure, involves more drive components, and thus is complex in operation, high in equipment cost and high in failure rate. In addition, due to a complicate structure design, remaining seasonings are easy to deposit in the grinder, thereby being inconvenient to clean.

Document US 2006/076441 A1 discloses a handheld household grinder, comprising a housing having an accommodating cavity, wherein a grinding rod is arranged in the accommodating cavity of the housing; the upper portion of the grinding rod penetrates through the housing until the grinding rod is partially exposed out of the accommodating cavity; a stress block is fixed on the upper portion of the grinding rod outside the accommodating cavity; a through hole is formed at the corresponding location of the housing underneath the grinding rod along the length direction; the lower portion of the grinding rod penetrates out of the accommodating cavity via the through hole or resets into the accommodating cavity via the through hole; a coarse surface is formed on the external lateral wall and proximal to the lower portion of the grinding rod; when the grinding rod drives the coarse surface on the external lateral wall of the grinding rod to move into the through hole, the clearance between the coarse surface and the internal lateral wall of the through hole forms a grinding space for the materials to be ground. A reset spring is arranged between the stress block and the housing, and the two ends of the reset spring abut against the housing and the stress block respectively. **Summary**

The technical problem to be solved by the present disclosure is to provide a handheld household grinder with simple structure, therefore, achieved a reduced cost and simple and reliable operation.

The technical solution adopted to resolve the above technical problem is to provide a handheld household grinder, as defined in claim 1.

The grinding of materials is completed by relative movement of the coarse surface on the grinding rod and the internal lateral wall of the through hole to achieve a simple operation.

The lower end face where the through hole is located in the accommodating cavity sinks downwards in the vertical direction to form a tapered face, with its small opening end mating with the through hole. By virtue of the tapered face, large-grained seasonings in the accommodating cavity automatically gather into the through hole.

The upper portion of the grinding rod outside the accommodating cavity is fixed with a stress block whereby an external action force is conveniently applied to the grinding rod so as to drive the grinding rod to move axially.

The stress block is detachably connected to the upper portion of the grinding rod.

A reset spring is arranged between the stress block and the housing, with its two ends respectively abutting against the housing and the stress block.

A working cavity is provided on the housing above the accommodating cavity. The upper portion of the grinding rod extends into the working cavity in which the stress block and the reset spring are also accommodated. An active block is arranged above the stress block deviating from the grinding rod, in the working cavity. Inertia force of the active block is used to impact the stress block so as to drive the grinding rod to axially move, therefore a user is able to operate with one hand, that is, the user grasps the housing with one hand and shakes the housing so as to enable the active block in the working cavity to shake back and forth to impact the stress block.

The lateral wall of the housing extends upwards along the length direction to form a groove with an upward opening. The opening of the groove is covered with an upper end cap. The lower end face of the upper end cap and the internal surface of the groove encircle to form the working cavity.

The housing is comprised by a body with a downward opening and a lower end cap covering the opening of the body. The upper end face of the lower end cap and the internal lateral wall of the body encircle to form the accommodating cavity; the through hole is formed in the lower end cap. Cleaning of the accommodating cavity or refilling of seasonings to be ground is convenient by way of detaching the lower end cap.

With the abovementioned structure, as compared to the prior art, the handheld household grinder provided by the present disclosure has the advantages that the seasonings are ground by the mating of the grinding rod and the through hole in the housing, which requires less components, and the structure is simple and reliable; and by adding an active block, the user can operate with one hand, hence, simply the operation; meanwhile due to the closed working cavity, outside dust or oil stain is prevented from falling into the accommodating cavity via the clearance of the hole that is in sliding fit with the grinding rod in the housing.

### Brief Description of the Drawings

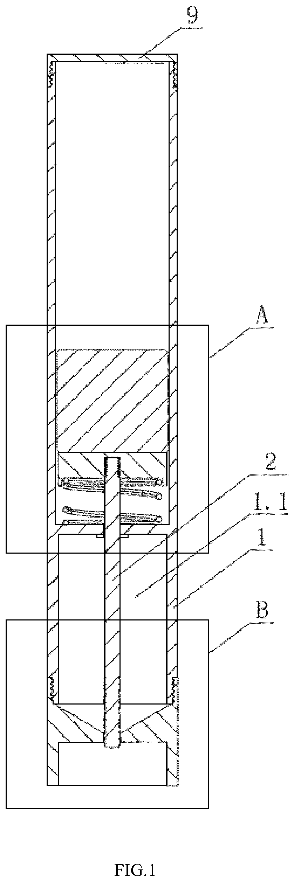

FIG.1 is a schematic structural diagram of a handheld household grinder of the present disclosure.

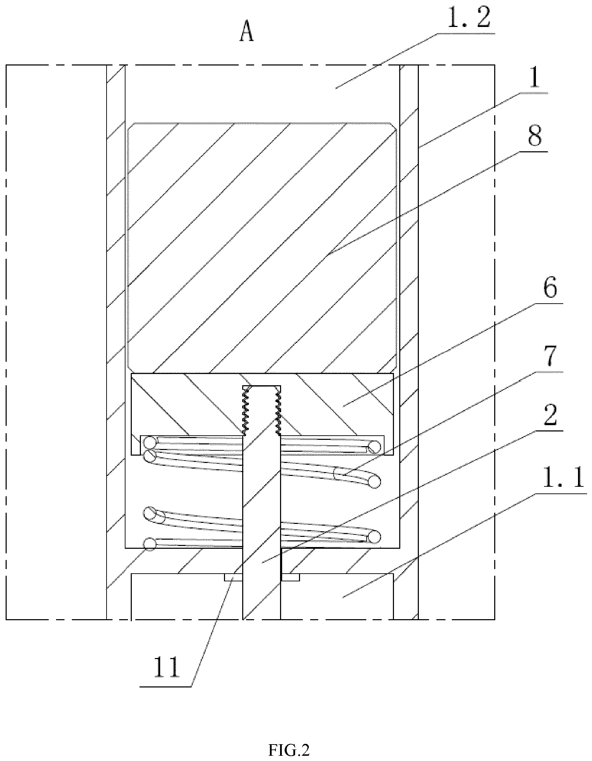

FIG.2 is a schematic diagram of partially enlarged area "A" in FIG. 1.

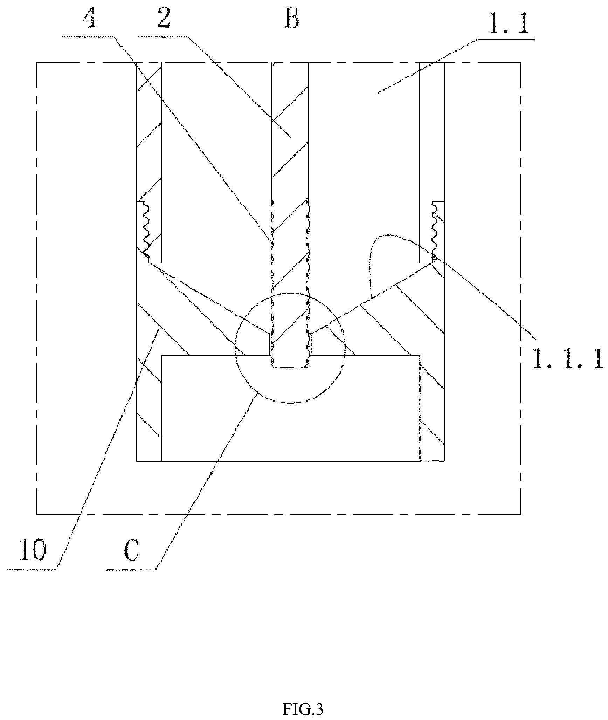

FIG.3 is a schematic diagram of partially enlarged area " B" in FIG. 1.

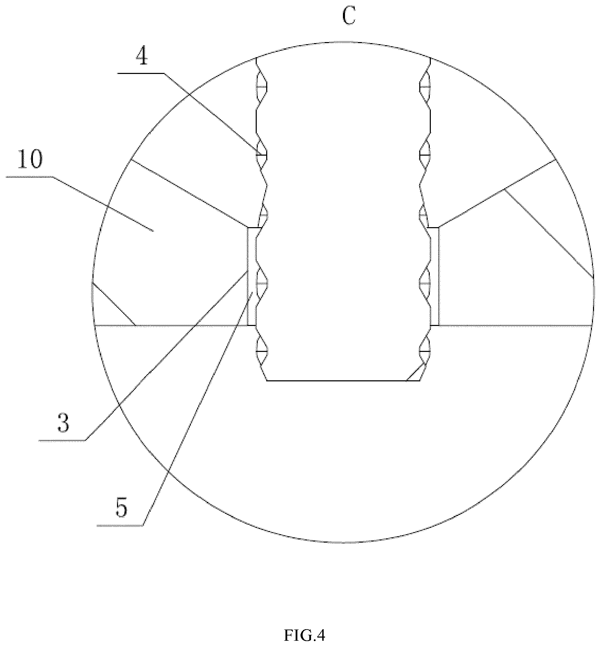

FIG.4 is a schematic diagram of partially enlarged area " C" in FIG. 3.
Among them: 1 housing; 1.1 accommodating cavity; 1.1.1 tapered face; 1.2 working cavity; 2 grinding rod; 3 through hole; 4 coarse surface; 5 grinding space; 6 stress block; 7 reset spring; 8 active block; 9 upper end cap; 10 lower end cap; 11 insulated pad.

### Detailed Description of the Embodiments

The present disclosure will be explained in detail by referring to the appended drawings and the particular embodiments.

The present disclosure provides a handheld household grinder , which comprises a housing 1 having an accommodating cavity 1.1 and a grinding rod 2 is arranged in the accommodating cavity 1.1 of the housing 1; the upper portion of the grinding rod 2 penetrates through the housing 1 until the grinding rod 2 is partially exposed out of the accommodating cavity 1.1; a through hole 3 is formed at the corresponding location of the housing 1 underneath the grinding rod 2 along the length direction; the lower portion of the grinding rod 2 penetrates out of the accommodating cavity 1.1 via the through hole 3 or resets into the accommodating cavity 1.1 via the through hole 3, that is to say, the grinding rod 2 may move along its length direction, the lower portion of the grinding rod 2 penetrates through the through hole 3 to the outside of the accommodating cavity 1.1, or resets and is received in the accommodating cavity 1.1 or the lower end face of the grinding rod 2 is just accommodated in the through hole 3; the external lateral wall, proximal to the lower portion of the grinding rod 2 is provided with a coarse surface 4; when the grinding rod 2 drives the coarse surface 4 on the external lateral wall of the grinding rod 2 to move into the through hole 3, the clearance between the coarse surface 4 and the internal lateral wall of the through hole 3 forms a grinding space 5 where materials are ground.

The said through hole 3 is provided for the lower portion of the grinding rod 2 to freely pass through outside the housing, therefore, it can be selected from a square hole, round hole or other arbitrary shapes. Similarly, the grinding rod 2 can be a round rod or a square rod and etc.

The said coarse surface 4 can be a polished rod, a plurality of pits are formed in its external lateral wall by sanding and all pits constitute the coarse surface 4. Optionally, the external lateral wall of the polished rod is cladded with a covering layer having a coarse surface. Even, the external lateral wall is coated with a granular layer. However, considering that the grinder of the present disclosure is used mostly in family kitchen, to prevent seasonings from being mixed with impurities, granular impurities dropping from the coarse surface are not allowed, in such a case, it is preferred to sanding the polished rod to form a plurality of pits, and adjacent pits have ribs therebetween.

The above grinding space 5 refers to an annular clearance between the internal lateral wall of the through hole 3 and the rugged external face of the coarse surface 4. Arbitrary point in the annular clearance varies disorderly along the radial direction.

The lower end face where the through hole 3 is located in the accommodating cavity 1.1 sinks downwards along the vertical direction to form a tapered face 1.1.1, with its small opening end mating with the through hole 3. This mating means that the tapered face 1.1.1 is of a horn mouth shape having different diameters at two ends, the large opening end is connected with the internal lateral wall of the accommodating cavity 1.1, while the small opening end is conncctcd with the upper end of the through hole 3, therefore, large-grained materials in the accommodating cavity 1.1 automatically gather into the through hole 3, and finally grinding operation is completed in the grinding space 5.

The upper portion of the grinding rod 2 outside the accommodating cavity 1.1 is fixed with a stress block 6. An external action force is applied to the stress block 6. By driving the grinding rod 2 to reciprocate along its axial direction with the stress block 6, seasonings are continuously ground.

The stress block 6 is detachably connected to the upper portion of the grinding rod 2.

A reset spring 7 is arranged between the stress block 6 and the housing 1, with its two ends respectively abutting against the housing 1 and the stress block 6.

A working cavity 1.2 is arranged on the housing 1 above the accommodating cavity 1.1. The upper portion of the grinding rod 2 extends into the working cavity 1.2; the stress block 6 and the reset spring 7 are also located in the working cavity 1.2. An active block 8 is arranged above the stress block 6 deviating from the grinding rod 2, in the working cavity 1.2.The user merely needs to grasp the housing 1 and continuously shake the housing 1 back and forth, that is to say, inertia force of the active block 8 is used to impact the stress block 6 so as to grind the seasonings. In such a case, the user is able to operate with one hand.

The lateral wall of the housing 1 extends upwards along the length direction to form a groove with an upward opening. The opening of the groove is covered with an upper end cap 9. The lower end face of the upper end cap 9 and the internal surface of the groove encircle to form the working cavity 1.2.

The housing 1 is comprised by a body with a downward opening and a lower end cap 10 covering the opening of the body. The upper end face of the lower end cap 10 and the internal lateral wall of the body encircle to form the accommodating cavity 1.1; the through hole 3 is formed in the lower end cap 10. The seasonings are conveniently filled in the accommodating cavity 1.1 by the detachable lower end cap 10.

The accommodating cavity 1.1 is internally provided with an annular insulated pad 11, which sheathes outside the grinding rod 2, and of which the upper end face fits the top face of the accommodating cavity 1.1. The grinding rod 2 and the insulated pad 11 are in sliding fit for preventing seasoning powder in the accommodating cavity 1.1 from blocking the part between the grinding rod 2 and the hole in the housing 1.

The grinder provided by the present disclosure operates as the following work principle: the user grasps the housing 1 and shakes it back and forth along the length direction of the housing 1, in turns, the active block 8 in the working cavity 1.2 continuously impacts the stress block 6 under the effect of inertia force per se, the stress block drives the grinding rod 2 to reciprocate axially, such that coarse-grained seasonings are continuously brought into the grinding space 5 following the axial movement of the grinding rod, and finally ground into fine-grained seasonings and brought out of the housing 1. If new coarse-grained seasonings need to be refilled, one merely needs to open the lower end cap 10.

The above is merely the explanations of preferred embodiments of the present disclosure, which however cannot be understood as limitations to the claims.

## Claims

1. A handheld household grinder, comprising a housing (1) having an accommodating cavity (1.1), wherein
a grinding rod (2) is arranged in the accommodating cavity (1.1) of the housing (1); the upper portion of the grinding rod (2) penetrates through the housing (1) until the grinding rod (2) is partially exposed out of the accommodating cavity (1.1);
a stress block (6) is fixed on the upper portion of the grinding rod (2) outside the accommodating cavity (1.1);
a through hole (3) is formed at the corresponding location of the housing (1) underneath the grinding rod (2) along the length direction; the lower portion of the grinding rod (2) penetrates out of the accommodating cavity (1.1) via the through hole (3) or resets into the accommodating cavity (1.1) via the through hole (3);
a coarse surface (4) is formed on the external lateral wall and proximal to the lower portion of the grinding rod (2); when the grinding rod (2) drives the coarse surface (4) on the external lateral wall of the grinding rod (2) to move into the through hole (3), the clearance between the coarse surface (4) and the internal lateral wall of the through hole (3) forms a grinding space (5) for the materials to be ground;
wherein a reset spring (7) is arranged between the stress block (6) and the housing (1), and the two ends of the reset spring (7) abut against the housing (1) and the stress block (6) respectively;
**characterized in that**
a working cavity (1.2) is arranged on the housing (1) above the accommodating cavity (1.1); the upper portion of the grinding rod (2) extends into the working cavity (1.2); the stress block (6) and the reset spring (7) are also located in the working cavity (1.2); an active block (8) is arranged above the stress block (6) in the working cavity (1.2) deviating from the grinding rod (2), wherein the inertia force of the active block (8) is used to impact the stress block (6) so as to grind the seasonings, when the user continuously shake the housing (1) back and forth.

2. The handheld household grinder of claim 1, wherein the lower end face where the through hole (3) is located in the accommodating cavity (1.1) sinks downwards along the vertical direction to form a tapered face (1.1.1), the small opening end of the tapered face (1.1.1) mates with the through hole (3).

3. The handheld household grinder of claim 1, wherein the stress block (6) is detachably connected to the upper portion of the grinding rod (2).

4. The handheld household grinder of claim 1, wherein the lateral wall of the housing (1) extends upwards along the length direction to form a groove with an upward opening; the opening of the groove is covered with an upper end cap (9); the lower end face of the upper end cap (9) and the internal surface of the groove encircle to form the working cavity (1.2).

5. The handheld household grinder of claim 1, wherein the housing (1) comprises a body with a downward opening and a lower end cap (10) covering the opening of the body; the upper end face of the lower end cap (10) and the internal lateral wall of the body encircle to form the accommodating cavity (1.1); the through hole (3) is formed in the lower end cap (10).

## Patentansprüche

1. Handgeführte Haushaltsmühle, ein Gehäuse (1) umfassend, das einen Aufnahmehohlraum (1.1) aufweist, wobei
in dem Aufnahmehohlraum (1.1) des Gehäuses (1) eine Mahlstange (2) angeordnet ist, wobei der obere Abschnitt der Mahlstange (2) das Gehäuse (1) durchdringt, bis die Mahlstange (2) außerhalb des Aufnahmehohlraums (1.1) teilweise freiliegt,
an dem oberen Abschnitt der Mahlstange (2) außerhalb des Aufnahmehohlraums (1.1) ein Druckblock (6) befestigt ist,
an der entsprechenden Stelle des Gehäuses (1) unter der Mahlstange (2) in der Längenrichtung eine Durchgangsöffnung (3) gebildet ist, wobei der untere Abschnitt der Mahlstange (2) mittels der Durchgangsöffnung (3) aus dem Aufnahmehohlraum (1.1) hinaus dringt oder sich mittels der Durchgangsöffnung (3) in den Aufnahmehohlraum (1.1) zurückstellt,
an der äußeren Seitenwand und nahe dem unteren Abschnitt der Mahlstange (2) eine raue Oberfläche (4) gebildet ist, wobei der Spielraum zwischen der rauen Oberfläche (4) und der inneren Seitenwand der Durchgangsöffnung (3) einen Mahlraum (5) für zu mahlende Materialien bildet, wenn die Mahlstange (2) die raue Oberfläche (4) an der äußeren Seitenwand der Mahlstange (2) antreibt, sich in die Durchgangsöffnung (3) hinein zu bewegen,
wobei zwischen dem Druckblock (6) und dem Gehäuse (1) eine Rückstellfeder (7) angeordnet ist und die zwei Enden der Rückstellfeder (7) an dem Gehäuse (1) beziehungsweise dem Druckblock (6) anliegen,
**dadurch gekennzeichnet, dass** an dem Gehäuse (1) über dem Aufnahmehohlraum (1.1) ein Arbeitshohlraum (1.2) angeordnet ist, wobei sich der obere Abschnitt der Mahlstange (2) in den Arbeitshohlraum (1.2) hinein erstreckt, sich der Druckblock (6) und die Rückstellfeder (7) ebenfalls in dem Arbeitshohlraum (1.2) befinden, über dem Druckblock (6) in dem Arbeitshohlraum (1.2) abweichend von der Mahlstange (2) ein aktiver Block (8) angeordnet ist, wobei die Trägheitskraft des aktiven Blocks (8) verwendet wird, um auf den Druckblock (6) einzuwirken, so dass die Gewürze gemahlen werden, wenn der Anwender das Gehäuse (1) kontinuierlich vor- und rückwärts schüttelt.

2. - Handgeführte Haushaltsmühle nach Anspruch 1, wobei die untere Endfläche, an der sich die Durchgangsöffnung (3) in dem Aufnahmehohlraum (1.1) befindet, in der vertikalen Richtung nach unten abfällt, um eine konische Fläche (1.1.1) zu bilden, wobei die kleine Öffnung am Ende der konischen Fläche (1.1.1) mit der Durchgangsöffnung (3) übereinstimmt.

3. - Handgeführte Haushaltsmühle nach Anspruch 1, wobei der Druckblock (6) lösbar mit dem oberen Abschnitt der Mahlstange (2) verbunden ist.

4. - Handgeführte Haushaltsmühle nach Anspruch 1, wobei sich die Seitenwand des Gehäuses (1) in der Längenrichtung nach oben erstreckt, um eine Rille mit einer nach oben gerichteten Öffnung zu bilden, wobei die Öffnung der Rille mit einer oberen Endkappe (9) bedeckt ist, die untere Endfläche der oberen Endkappe (9) und die Innenfläche der Rille umschließend sind, um den Arbeitshohlraum (1.2) zu bilden.

5. - Handgeführte Haushaltsmühle nach Anspruch 1, wobei das Gehäuse (1) einen Hauptteil mit einer nach unten gerichteten Öffnung und einer unteren Endkappe (10) umfasst, welche die Öffnung des Hauptteils bedeckt, wobei die obere Endfläche der unteren Endkappe (10) und die innere Seitenwand des Hauptteils umschließend sind, um den Aufnahmehohlraum (1.1) zu bilden, wobei die Durchgangsöffnung (3) in der unteren Endkappe (10) gebildet ist.

## Revendications

1. - Broyeur ménager portatif, comprenant un boîtier (1) ayant une cavité de réception (1.1), dans lequel
une tige de broyage (2) est disposée dans la cavité de réception (1.1) du boîtier (1) ; la partie supérieure de la tige de broyage (2) traverse le boîtier (1) jusqu'à ce que la tige de broyage (2) soit partiellement exposée hors de la cavité de réception (1.1) ;
un bloc de contrainte (6) est fixé sur la partie supérieure de la tige de broyage (2) à l'extérieur de la cavité de réception (1.1) ;
un trou traversant (3) est formé à la position correspondante du boîtier (1) sous la tige de broyage (2) le long de la direction de longueur ; la partie inférieure de la tige de broyage (2) s'étend hors de la cavité de réception (1.1) par l'intermédiaire du trou traversant (3) ou se réintroduit dans la cavité de réception (1.1) par l'intermédiaire du trou traversant (3) ;
une surface grossière (4) est formée sur la paroi latérale externe et proche de la partie inférieure de la tige de broyage (2) ; lorsque la tige de broyage (2) amène la surface grossière (4) sur la paroi latérale externe de la tige de broyage (2) à se déplacer dans le trou traversant (3), l'intervalle entre la surface grossière (4) et la paroi latérale interne du trou traversant (3) forme un espace de broyage (5) pour les matières à broyer ;
un ressort de rappel (7) étant disposé entre le bloc de contrainte (6) et le boîtier (1), et les deux extrémités du ressort de rappel (7) sont en butée contre le boîtier (1) et le bloc de contrainte (6), respectivement ;
**caractérisé par le fait qu'**une cavité de travail (1.2) est disposée sur le boîtier (1) au-dessus de la cavité de réception (1.1) ; la partie supérieure de la tige de broyage (2) s'étend dans la cavité de travail (1.2) ; le bloc de contrainte (6) et le ressort de rappel (7) sont également situés dans la cavité de travail (1.2) ; un bloc actif (8) est disposé au-dessus du bloc de contrainte (6) dans la cavité de travail (1.2), s'écartant de la tige de broyage (2), la force d'inertie du bloc actif (8) étant utilisée pour impacter le bloc de contrainte (6) de façon à broyer les condiments, lorsque l'utilisateur secoue de manière continue le boîtier (1) d'avant en arrière.

2. - Broyeur ménager portatif selon la revendication 1, dans lequel la face d'extrémité inférieure où le trou traversant (3) est situé dans la cavité de réception (1.1) s'enfonce vers le bas le long de la direction verticale pour former une face effilée (1.1.1), l'extrémité à petite ouverture de la face effilée (1.1.1) rencontrant le trou traversant (3).

3. - Broyeur ménager portatif selon la revendication 1, dans lequel le bloc de contrainte (6) est relié de manière détachable à la partie supérieure de la tige de broyage (2).

4. - Broyeur ménager portatif selon la revendication 1, dans lequel la paroi latérale du boîtier (1) s'étend vers le haut le long de la direction de longueur pour former une rainure avec une ouverture vers le haut ; l'ouverture de la rainure est recouverte d'un capuchon supérieur (9) ; la face d'extrémité inférieure du capuchon supérieur (9) et la surface interne de la rainure s'encerclent pour former la cavité de travail (1.2).

5. - Broyeur ménager portatif selon la revendication 1, dans lequel le boîtier (1) comprend un corps avec une ouverture vers le bas et un capuchon inférieur (10) recouvrant l'ouverture du corps ; la face d'extrémité supérieure du capuchon inférieur (10) et la paroi latérale interne du corps s'encerclent pour former la cavité de réception (1.1) ; le trou traversant (3) est formé dans le capuchon inférieur (10).
